# EUROPEAN PATENT SPECIFICATION

(11) **EP 0 585 855 B1**
(45) Date of publication and mention of the grant of the patent: **02.01.1997**
(21) Application number: 93113842.4
(22) Date of filing: 30.08.1993
(51) Int. Cl.: B29C 49/26

(54) **Process for producting laminated hose**
Verfahren zur Herstellung eines laminierten Schlauches
Procédé pour la fabrication d'un tuyau multicouche

(30) Priority: 29.08.1992 JP 253763/92; 29.08.1992 JP 253764/92
(43) Date of publication of application: 09.03.1994
(73) Proprietor: TOKAI RUBBER INDUSTRIES, LTD., Komaki-shi Aichi-ken (JP)
(72) Inventor: Kawasaki, Minoru, c/o Tokai Rubber Industries, Ltd, Komaki-shi, Aichi-ken (JP); Miyajima, Atsuo c/o Tokai Rubber Industries, Ltd, Komaki-shi, Aichi-ken (JP)
(74) Representative: Tiedtke, Harro, Dipl.-Ing.

(56) References cited:
- EP-A- 0 298 125
- EP-A- 0 337 674
- FR-A- 1 198 620
- FR-A- 2 090 342
- GB-A- 2 188 695
- US-A- 2 312 993
- US-A- 3 602 945
- PATENT ABSTRACTS OF JAPAN vol. 7, no. 240 (M-251)(1385) 25 October 1983 & JP-A-58 128 815 (KAWASAKI JUKOGYO) 1 August 1983

## Description

The present invention relates to a process for producing a laminated hose according to the preamble of claim 1. In particular, it relates to a production process which is optimum for producing automobile filler hoses (i.e., fuel hoses) which are required to have an anti-gasoline property, an anti-gasoline permeability, and the like, or air intake hoses which are required to have an anti-oil property, a heat resistance, and the like.

In the automobile filler hoses, rubber materials such as mixtures of NBR (i.e., nitrile rubber) and PVC (i.e., polyvinyl chloride) have been used so far, rubber materials which have an anti-gasoline property, an anti-gasoline permeability, and the like. However, the regulation has become so strict in terms of the gasoline permeation that conventional single layered hoses made of the rubber materials can hardly cope with the regulation.

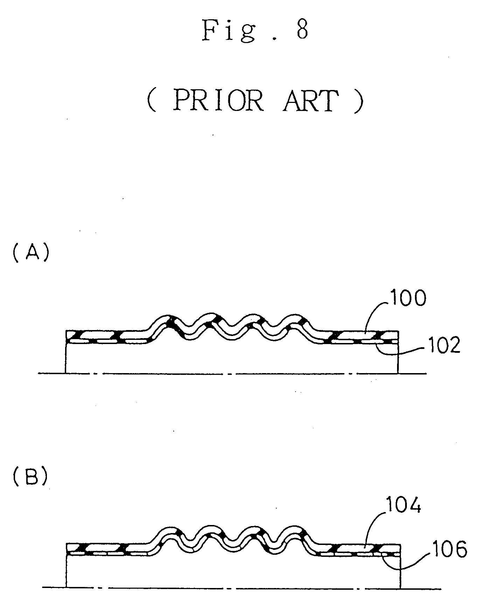

Under the situation, as illustrated in Figure 8 (A), there was proposed a laminated hose which includes a rubber outer layer 100 and a thin fluoroelastomer film 102 (i.e., an inner layer) formed on the inner periphery of the rubber outer layer 100. Although the laminated hose having such a construction is satisfactory in the performance, it is associated with an increasing production cost. Hence, it has been scarcely put into actual applications.

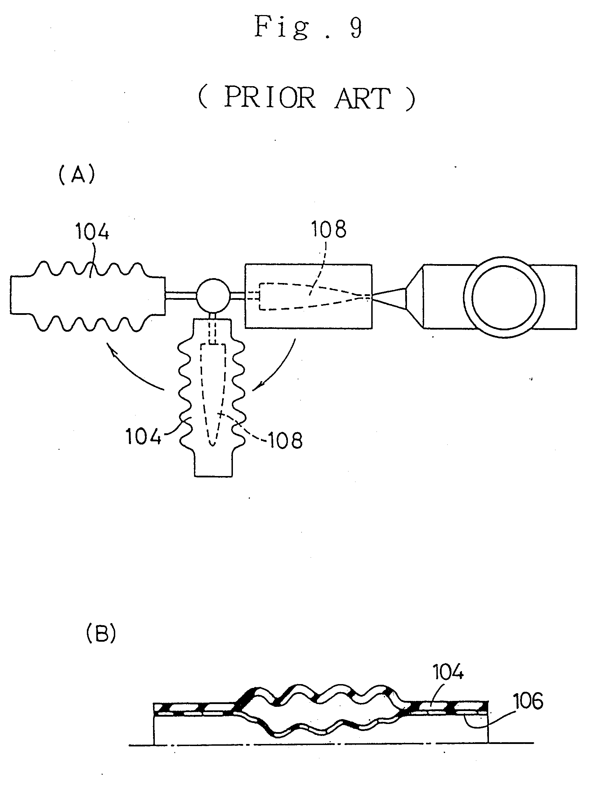

Further, as set forth in Japanese Unexamined Patent Publication (KOKAI) No. 3-275,328 and as illustrated in Figure 8 (B), there was proposed another laminated hose which includes a rubber outer layer 104 having a predetermined thickness, and a resin inner layer 106 having a thickness smaller than that of the rubber outer layer 104 and formed on the inner periphery of the rubber outer layer 104. In the publication, as illustrated in Figure 9 (A), there was also proposed a process for producing the laminated hose illustrated in Figure 8 (B). JP-3-275 328 shows the features of the preamble of claim 1.

As illustrated in Figure 9 (A), in the proposed production process, the rubber outer layer 104 is formed by molding with a mold. At the same time, but independently of the molding of the rubber outer layer 104, a resin parison 108 is formed by injection molding in a bag shape closed at an end. Then, the parison 108 is removed from an injection molding mold, and it is rotated by 90° while keeping the molten state. Thereafter, the rubber outer layer 104 formed in advance is disposed around the parison 108, and blow molding is carried out onto the parison 108 so as to bond the parison 108 closely onto the inner periphery of the rubber outer layer 104. In this way, the two-layered hose illustrated in Figure 8 (B) is produced finally.

However, it is necessary to cut off the resin parison 108 at the end closed in a bag shape according to the production process set forth in the publication, and accordingly there arises the material loss inevitably. In addition, the number of the production steps is increased because of the cut-off step, and thereby the production cost is pushed up.

Further, since the resin inner layer 106 is molded at the ends in the inner periphery in a free state by the production process set forth in the publication, the inner periphery suffers from inferior dimensional accuracy at the ends. As a result, an adequate sealing property can be scarcely attained at the ends when mating pipes to be connected with the two-layered hose are inserted into the inner periphery at the ends.

Furthermore, the production process set forth in the publication requires such a complicated apparatus that the facility cost is pushed up.

Moreover, it is hard to make the resin inner layer 106 thinner to a predetermined thickness or less (e.g., 0.2 mm or less) by the production process set forth in the publication. Namely, when the parison 108 is made too thin, it is hard to dispose the parison 108 in the rubber outer layer 104 and to carry out the blow molding to the parison 108 while keeping the parison 108 in the molten state, because the parison 108 having such a thin thickness cools at a faster rate.

In addition, when the rubber outer layer 104 and the resin inner layer 106 should be bonded closely by the production process set forth in the publication, the rubber outer layer 104 should be coated with an adhesive on the inner periphery. However, when the rubber outer layer 104 is coated with an adhesive on the inner periphery, it is hard to control the film thickness of the coated adhesive and to dry the adhesive after the coating.

An object of the present invention is to provide a facilitated process for producing a laminated hose yielding facilitated handling operations and a high accuracy of the produced hose.

The present invention can achieve the object according to the features of claim 1 by providing a process for producing a laminated hose, comprising the steps of:
a preliminary forming step of forming a preform including an inner tube and an outer tube;
a disposing step of disposing the preform in a mold while inserting mandrels into openings of the preform so as to close the openings and inhibit inside diameters of the openings from varying; and
a forming step of forming the preform into a laminated hose having a predetermined shape, thereby bonding outer periphery of the inner tube closely onto inner periphery of the outer tube.

In other words, a preform including an inner tube and a outer tube is formed preliminarily in the preliminary forming step. The preliminary forming step can be carried out by extrusion molding, by injection molding, or by blow molding.

Then, in the disposing step, the preform is disposed in a mold while inserting mandrels into openings of the preform so as to close the openings and inhibit inside diameters of the openings from varying. It is preferred that the preform is heated prior to the disposing step, subsequent to the disposing step, or simultaneously with the forming step later described.

Finally, in the forming step, the preform is formed into a laminated hose having a predetermined shape, thereby bonding outer periphery of the inner tube closely onto inner periphery of the outer tube.

In accordance with the present invention, the preform is closed at the openings with the mandrels inserted thereinto, and then it is formed into the laminated hose while keeping the closed state. Accordingly, it is unnecessary to form the preform so as to be closed at an end in a bag shape. Namely, it is not required to cut off the end closed in a bag shape as done in the conventional process set forth in Japanese Unexamined Patent Publication (KOKAI) No. 3-275,328 and as illustrated in Figure 9 (A). As a result, the material loss can be reduced, and at the same the number of production steps can be decreased as well. All in all, the production cost can be reduced accordingly.

Further, the preform is inhibited from varying the inside diameters of the openings by the mandrels inserted into the openings. Consequently, it is possible to form the laminated hose with high dimensional accuracy at the ends in the inner peripheries. Hence, the resulting laminated hose can exhibit an improved sealing property at the ends in the inner peripheries when mating pipes to be connected with the laminated hose are inserted into the inner peripheries at the ends.

Furthermore, the preform can be prepared in the preliminary forming step independently of the other steps, and it can be transferred to the forming step after re-softening it by heating. Accordingly, the preform can be formed into the laminated hose with the mold which can be ordinary and simple molds, e.g., an ordinary and simple blow molding mold. As a result, it is possible to reduce the facility cost such as mold costs for molds, costs for molding machines, and the like.

Moreover, the preform is prepared in advance prior to the disposing step and the forming step, and it is then subjected to the forming step with the mandrels inserted into the inner peripheries at the ends. Consequently, it is possible to produce a large variety of laminated hoses out of a plurality of the preforms prepared in advance by simply changing molds. Namely, in accordance with the present invention, it is possible to share the laminated hose production process up to the preliminary forming step even when the laminated hoses having a large variety of configurations should be produced.

In addition, independently of the preliminary forming step, the preform can be heated in the heating step before it is transferred to and formed into the laminated hose in the forming step. To put it differently, since there arise no problems even when the preform is cooled after the preliminary forming step, it is possible to form the inner tube of the preform in thicknesses being thinner than those obtained by the conventional process set forth in Japanese Unexamined Patent Publication (KOKAI) No. 3-275,328 and illustrated in Figure 9 (A). For instance, in accordance with the present invention, the inner tube of the preform can be thinned to a thickness of about 0.01 mm as far as the inner tube satisfies the anti-gasoline permeability. Such a thin inner tube contributes to enhancing the flexibility and the sealing property of the resulting laminated hose.

In the present invention, the inner and the outer tube of the preform is formed into their respective configuration in the resulting laminated hose when completing the forming step. That is to say, it is unnecessary to form the outer tube in the final configuration in the laminated hose in advance. Accordingly, no molding molds, no injection molding machines, or the like, are required to independently form the outer tube. Thus, the present invention can obviate an independent outer tube forming step, thereby reducing the facility cost and simplifying the whole production process of the laminated hose.

In the present invention, the preliminary forming step can be adapted for forming a preform having a tubular shape and including a straight resin inner tube having a predetermined thickness and a straight unvulcanized rubber outer tube having a thickness larger than that of the straight resin inner tube and provided with the straight resin inner tube disposed therein. If such is the case, the straight resin inner tube and the straight unvulcanized rubber outer tube are formed in their respective configurations in the resulting laminated hose in the forming step, and at the same time the unvulcanized rubber is vulcanized in the forming step. Therefore, the straight resin inner tube and the straight unvulcanized rubber outer tube can be bonded closely so as to constitute the resin inner layer and the rubber outer layer of the resulting laminated hose with ease, and the degree of designing freedom can be increased in the selection of the adhesive. Further, since the forming step is carried out to the preform in which the straight resin inner tube and the straight unvulcanized rubber outer tube are laminated, an advantageous effect can be obtained in that there scarcely arises the troubles associated with the trapped air at the boundary between the inner tube and the outer tube.

In particular, in the case that the outer tube is formed in the final configuration, the inner tube is inserted into the outer tube to form the preform, and the inner tube is formed so as to conform to the configuration of the outer tube in order to form the laminated hose, for instance, in the case that the outer tube has concavities, such as bellows, or the like, in the inner periphery, air is likely to be trapped between the outer tube and the inner tube in the forming step in which the inner tube is formed so as to conform to the final configuration of the outer tube in order to form the resulting laminated hose. However, in accordance with the present invention, it is possible to get rid of the problems of this kind completely.

The present invention enables to thin the inner tube of the preform or the inner layer of the resulting laminated hose. As far as the materials constituting the inner tube or the inner layer have sufficient properties, e.g., the anti-gasoline property, the anti-gasoline permeability, and the like, the thinner the inner tube or the inner layer is prepared, for example in a thickness of 0.2 mm or less, the more the resulting laminated hose is improved advantageously in terms of the flexibility, the sealing property, or the like. However, it is hard to thin the thickness of the inner layer to the aforementioned thickness or less by the conventional process set forth in Japanese Unexamined Patent Publication (KOKAI) No. 3-275,328 and illustrated in Figure 9 (A). Contrary to the conventional process, the present invention allows to make the inner tube or the inner layer thinner in thickness because the preform prepared in advance can be heated and softened prior to the forming step in which the preform is formed into the laminated hose.

In a certain application of the present invention, the preliminary forming step can be modified to include a preliminary outer tube forming step of forming the outer tube in a predetermined shape, a preliminary inner tube forming step of forming the inner tube in a tubular shape, and an assembling step of assembling the inner tube into the outer tube. If such is the case, it is possible to advantageously coat an adhesive on the outer periphery of the inner tube. Contrary to the adhesive coating on the inner periphery of the outer tube, it is easy to control the thickness of the adhesive on the outer periphery of the inner tube, and it is also easy to dry the adhesive thereon after coating the adhesive. Here, the preliminary outer tube forming step can be carried out prior to the preliminary inner tube forming step, or vice versa.

Especially, when the inner tube is made from resin in the present invention, an inner tube outer periphery activating can be preferably carried out instead of the adhesive coating. The inner tube outer periphery activating is adapted to improve the adhesion of the inner tube on the outer periphery, and it can be done by a sodium (Na) treatment, by a flame treatment, a corona treatment, a sputtering treatment, or the like.

In the present invention, it is preferred that the preliminary forming step, particularly the preliminary inner tube forming step thereof, is carried out by extrusion molding. The extrusion molding enables to form the preform or the inner tube in a continuous length, and the resulting continuous preform or the resulting continuous inner tube can be cut to predetermined dimensions. Thus, the extrusion molding enables to continuously produce the preforms or the inner tubes having predetermined lengths in a large quantity at less expensive costs. Additionally, the extrusion molding enables to form the preform, particularly the inner tube, in the thickness of about 0.01 mm, and it also allows to coat an adhesive on the outer periphery of the continuous inner tube with ease by immersing the inner tube into a solution containing the adhesive, by applying the adhesive thereon, by blowing the adhesive thereto, or the like.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Figures 1 (A) through 1 (C) illustrate laminated hoses which are produced in accordance with the present invention, wherein:
   Figure 1 (A) illustrates a laminated hose which is produced in accordance with a First or Second Preferred Embodiment of the present invention;
   Figure 1 (B) illustrates a bent laminated hose which is produced in accordance with a Third Preferred Embodiment of the present invention; and
   Figure 1 (C) illustrates a bent laminated hose which is produced in accordance with a Fourth Preferred Embodiment of the present invention;
Figures 2 (A) through 2 (D) illustrate production steps of the First Preferred Embodiment, wherein:

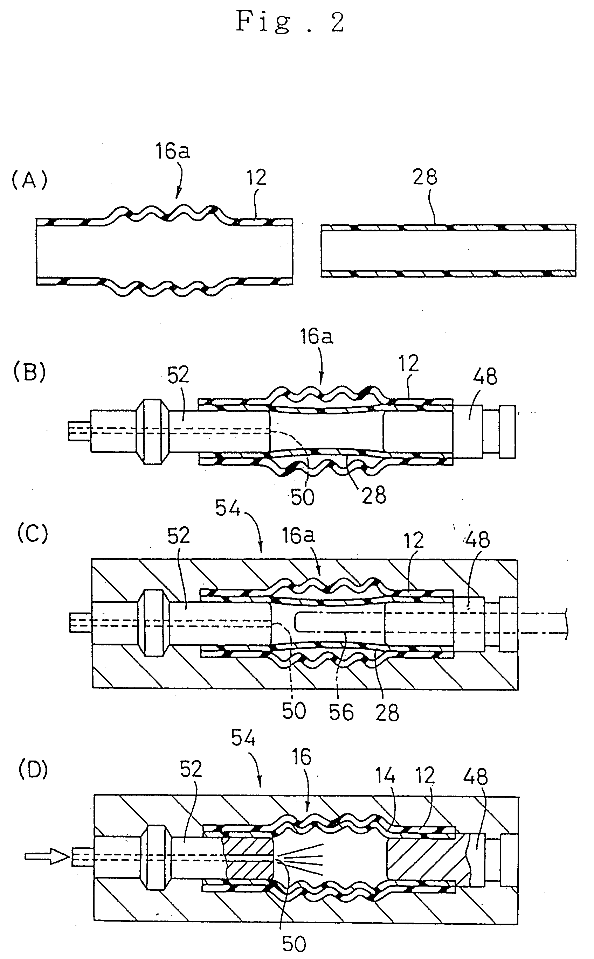

   Figure 2 (A) illustrates a preliminary forming step thereof;
   Figure 2 (B) illustrates a disposing step thereof;
   Figure 2 (C) illustrates a heating step thereof; and
   Figure 2 (D) illustrates a forming step thereof;

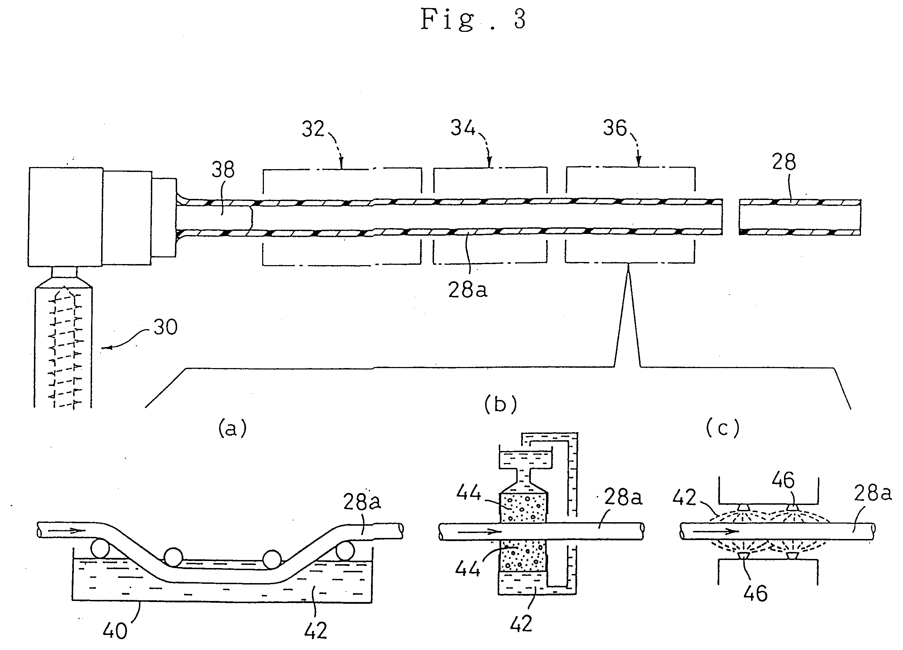

Figure 3 (a) through 3 (c) illustrate a preliminary inner tube forming step of the preliminary forming step of the First Preferred Embodiment, wherein:
   Figure 3 (a) illustrates an adhesive coating step of the preliminary inner tube forming step;
   Figure 3 (b) illustrates another adhesive coating step thereof; and
   Figure 3 (c) illustrates a still another adhesive coating step thereof;

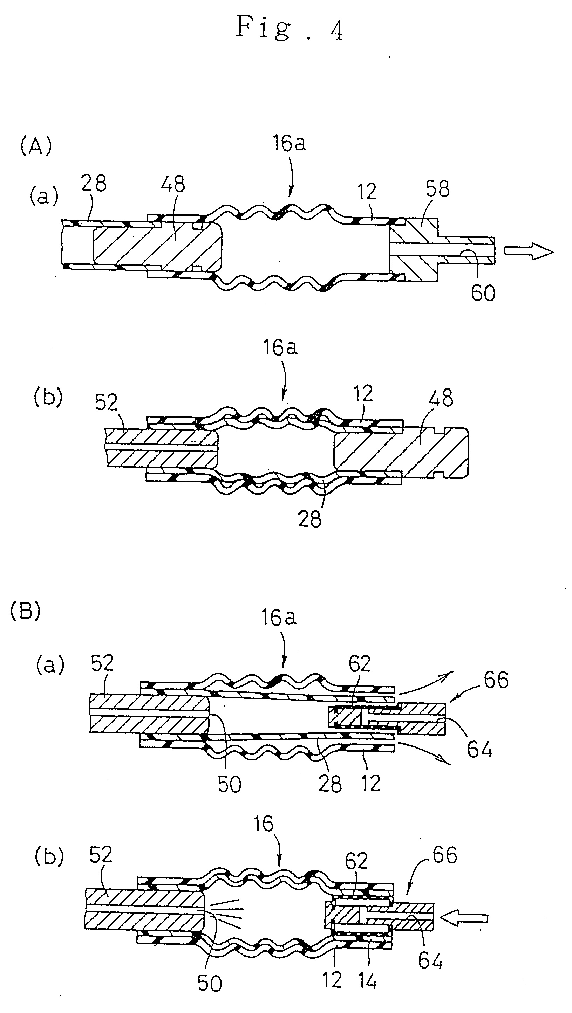

Figures 4 (A) and 4 (B) illustrate two modified versions of the First Preferred Embodiment, wherein;
   Figures 4 (A) (a) illustrates a modified version of an assembling step of the preliminary forming step thereof;
   Figure 4 (A) (b) illustrates a modified version of the disposing step thereof;
   Figure 4 (B) (a) illustrates another modified version of the disposing step thereof; and
   Figure 4 (B) (b) illustrates another modified version of the forming step thereof;

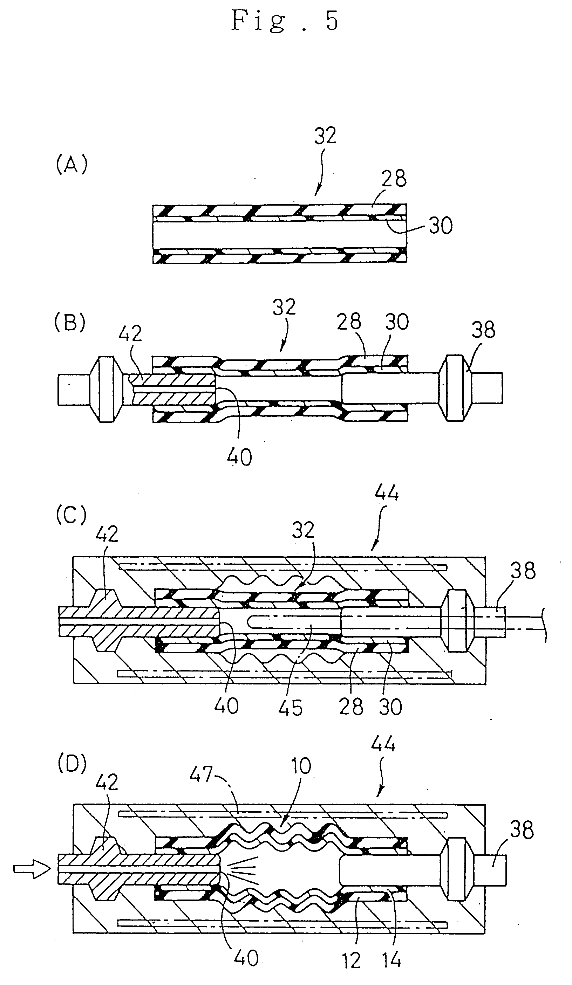

Figures 5 (A) through 5 (D) illustrate production steps of the Second Preferred Embodiment, wherein:
   Figure 5 (A) illustrates a preliminary forming step thereof;
   Figure 5 (B) illustrates a disposing step thereof;
   Figure 5 (C) illustrates a heating step thereof; and
   Figure 5 (D) illustrates a forming step thereof;

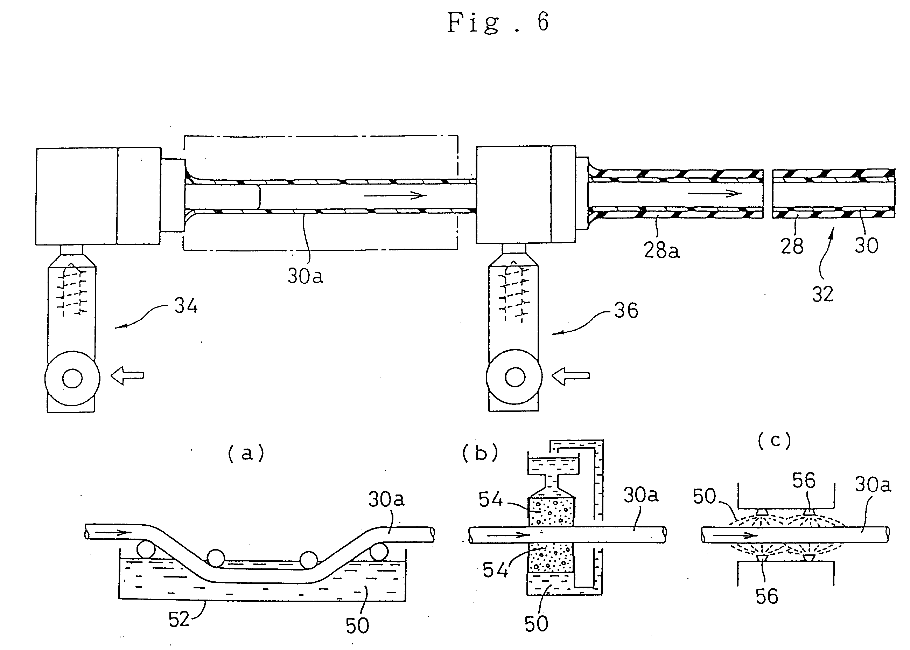

Figure 6 (a) through 6 (c) illustrate the preliminary forming step of the Second Preferred Embodiment, wherein:
   Figure 6 (a) illustrates an adhesive coating step of the preliminary forming step;
   Figure 6 (b) illustrates another adhesive coating step thereof; and
   Figure 6 (c) illustrates a still another adhesive coating step thereof;

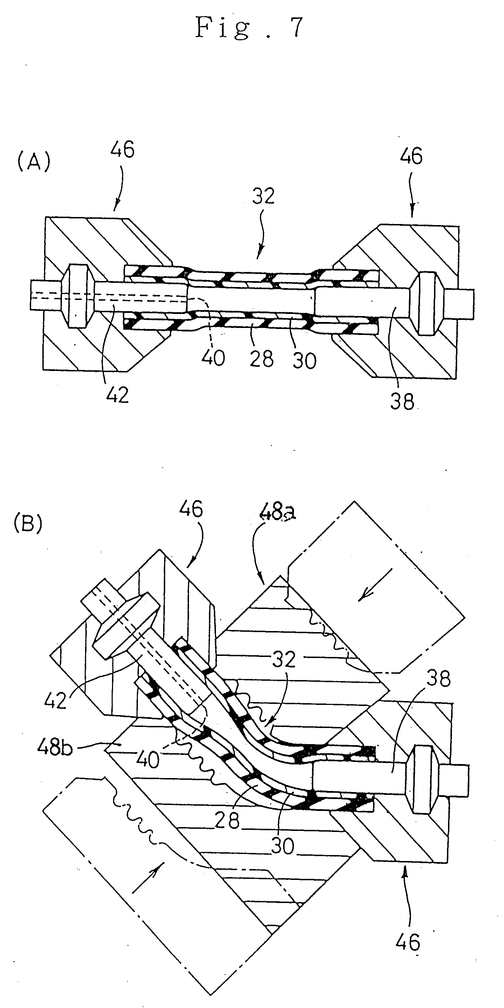

Figures 7 (A) and 7 (B) illustrate production steps of the Third Preferred Embodiment, wherein;
   Figures 7 (A) illustrates a disposing step thereof; and
   Figure 7 (B) illustrates a forming step thereof;
Figures 8 (A) and 8 (B) illustrate two conventional laminated hoses, wherein;
   Figure 8 (A) illustrates a conventional laminated hose including a rubber outer layer and a fluoroelastomer inner layer; and
   Figure 8 (B) illustrates another conventional laminated hose including a rubber outer layer and a resin inner layer; and
Figures 9 (A) and 9 (B) illustrate a conventional process for producing a laminated hose and a laminated hose produced by the conventional production process, wherein:
   Figure 9 (A) illustrates production steps of the conventional process; and
   Figure 9 (B) illustrates a trouble associated with the laminated hose produced by the conventional production process.

### DETAILED DESCRIPTION OF THE PREFERRED EMBODIMENTS

Having generally described the present invention, a further understanding can be obtained by reference to the specific preferred embodiments which are provided herein for purposes of illustration only and are not intended to limit the scope of the appended claims.

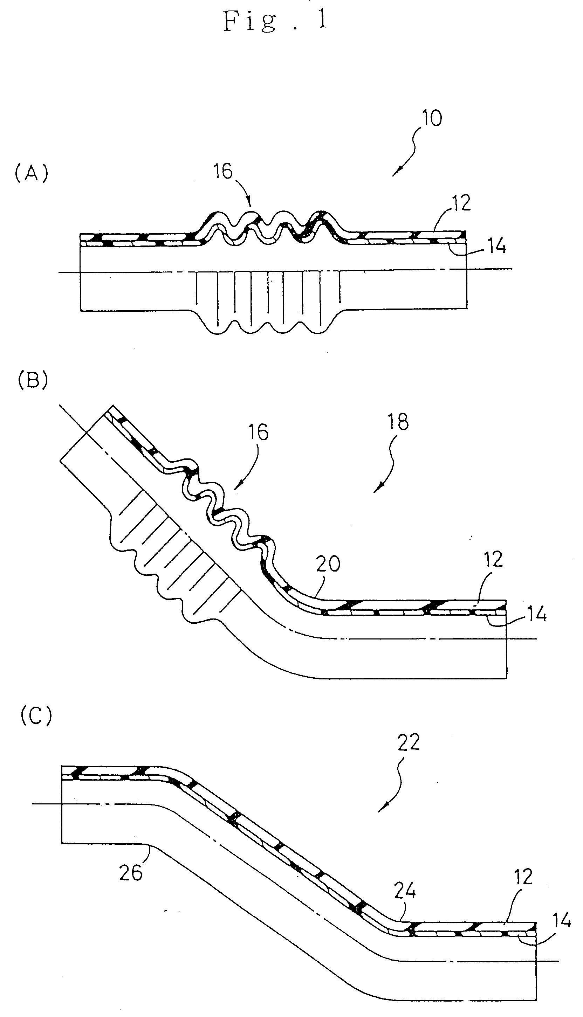

Figures 1 (A), 1 (B), and 1 (C) illustrate laminated hoses, for instance filler hoses, air intake hoses, and the like, which are produced in accordance with the First or Second Preferred Embodiment, the Third Preferred Embodiment, and the Fourth Preferred Embodiment of the present invention, respectively.

In particular, Figure 1 (A) illustrates a laminated hose which is produced in accordance with the First or Second Preferred Embodiment. The laminated hose 10 comprises a rubber outer layer 12 having a predetermined thickness (e.g., a thickness of 2 mm or more) and flexibility, and a resin inner layer 14 having a predetermined thickness which is smaller than that of the rubber outer layer 12 (e.g., a thickness of 0.5 mm or less), and it also includes bellows 16 at the intermediate portion in the longitudinal direction. Here, the resin inner layer 14 is made from a hard resinous material which is good in the resistance against the fluid flowing therein (e.g., the anti-gasoline property, the anti-gasoline permeability, and the like).

Further, Figure 1 (B) illustrates a bent laminated hose which is produced in accordance with the Third Preferred Embodiment. Likewise, the laminated hose 18 comprises a rubber outer layer 12 having a predetermined thickness, and a resin inner layer 14 having a predetermined thickness of smaller than that of the rubber outer layer 12 and the superb resistance against the fluid flowing therein, and it is bent at a portion 20 which is positioned at the substantially middle in the longitudinal direction. On one of the sides with respect to the bent portion 20, there are formed bellows 16 similar to those of the laminated hoses 10 illustrated in Figure 1 (A).

Furthermore, Figure 1 (C) illustrates a bent laminated hose which is produced in accordance with the Fourth Preferred Embodiment. Similar to the laminated hoses 10 and 18 illustrated in Figures 1 (A) and 1 (B), the laminated hose 20 comprises a rubber outer layer 12 having a predetermined thickness, and a hard resin inner layer 14 having a predetermined thickness of smaller than that of the rubber outer layer 12 and the superb resistance against the fluid flowing therein. However, the laminated hose 20 is free from the bellows 16. The laminated hose 20 is formed straight at the intermediate portion in the longitudinal direction, but it is bent at two locations, e.g., bent portions 24 and 26, thereby forming a bent configuration.

### First Preferred Embodiment

The First Preferred Embodiment of the present invention will be hereinafter described with reference to Figures 2 (A) through 2 (D) and Figures 3 (a) through 3 (c). In particular, Figures 2 (A) through 2 (D) illustrate the overall production process of the First Preferred Embodiment, and Figures 3 (a) through 3 (c) illustrate the preliminary inner tube forming step thereof.

As illustrated in Figure 2 (A), in the First Preferred Embodiment, the rubber outer tube 12 having bellows 16a and a resin inner tube 28 having a straight tubular shape are formed preliminarily but independently of each other. The rubber outer tube 12 can be formed by molding with a mold (e.g., injection molding), but it can be formed by extrusion molding, by blow molding, or the like, as well. The resin inner tube 28 can be formed by a variety of molding processes such as extrusion molding, injection molding, blow molding, and the like, but it is preferably formed by extrusion molding.

Specifically speaking, the resin inner tube 28 can be formed by extrusion molding as illustrated in Figures 3 (a) through 3 (c). For example, a continuous resin tube 28a is extrusion molded in a continuous length continuously by using an extruder 30, it is sized to a predetermined dimension in the inner periphery with a sizing die 38 during the extrusion molding. Thereafter, the thus extruded continuous resin tube 28a is cooled, dried and coated with an adhesive at a cooling station 32, a drying station 34 and a coating station 36, respectively. Finally, the continuous resin tube 28a is cut to a predetermined dimension so as to prepare the resin inner tube 28 having a predetermined length.

In the preliminary inner tube forming step, the coating step can be carried out by the processes as illustrated in Figures 3 (a), 3 (b), 3 (c), and the like. For instance, as illustrated in Figure 3 (a), the coating step can be carried out by immersing the continuous resin tube 28a into an adhesive bath 40 holding an adhesive solution 42 therein. Further, as illustrated in Figure 3 (b), the coating step can be carried out by bringing the continuous resin tube 28a into contact continuously with sponges 44, 44 soaked with an adhesive solution 42. Furthermore, as illustrated in Figure 3 (c), the coating step can be carried out by spraying an adhesive solution 42 onto the continuous resin tube 28a through nozzles 46.

Instead of the coating step, the following inner tube outer periphery activating steps can be carried out in order to improve the adhesion of the resin inner tube 28 on the outer periphery. For instance, the sodium (Na) treatment can be carried out as follows: Firstly, the resin inner tube 28 is degreased with toluene. Secondly, it is immersed into a sodium etching treatment solution for 15 seconds to 1 minute approximately. The sodium etching treatment solution is prepared by solving a mixture of sodium and naphthalene into tetrahydrofuran or ammonia solvent. Thirdly, the resin inner tube 28 is washed with methanol in order to remove the excessive sodium etching treatment solution. Finally, it is washed with water in order to remove the excessive methanol. During the sodium (Na) treatment, the resin inner tube 28 is plugged in order to inhibit the treatment solutions from entering the inside. The flame treatment can be carried out by bringing the resin inner tube 28 into contact with a flame in order to promote oxidation of the outer periphery. The corona treatment can be carried out by applying the corona discharge to the resin inner tube 28 in the atmospheric pressure. The sputtering treatment can be carried out by argon-etching, in which an excited argon gas, collides with the resin inner tube 28 in a magnetic field or an electric field.

Turning now back to Figures 2 (A) and 2 (B), in the production process of the First Preferred Embodiment, the thus prepared resin inner tube 28 is first assembled into the rubber outer tube 12 which is prepared independently of the resin inner tube 28. Then, mandrels 48 and 52 are inserted into the resin inner tube 28 so as to enclose the ends, thereby closing the openings of the resin inner tube 28 at the ends and inhibiting the inside diameters of the openings from varying. The mandrel 52 is provided with a through hole 50 adapted for an air blowing operation later described.

Thereafter, the rubber outer tube 12 and the resin inner tube 28 with the mandrels 48 and 52 installed are disposed in a cavity of a blow molding mold 54. The resin inner tube 28 can be heated in advance in order to put it into a virtually molten state prior to the disposing operation, or it can be heated in order to put it into a virtually molten state after disposing the rubber outer tube 12 and the resin inner tube 28 with the mandrels 48 and 52 inserted in the blow molding mold 54.

In the case that the former heating process is carried out, namely when the resin inner tube 28 is heated prior to the disposing operation, the resin inner tube 28, the rubber outer tube 12 and the mandrels 48 and 52 can be put into a heating oven as a whole, or they can be heated by blowing a hot air thereto. In the case that the later heating process is carried out, namely when the resin inner tube 28 is heated after the disposing operation, only the resin inner tube 28 can be heated with a heater 56 which is advanced through the mandrel 48 so as to be placed in the resin inner tube 28 as illustrated in Figure 2 (C). If such is the case, the heater 56 can be a far-infrared radiation heater, or the like. Naturally, it is possible to employ the other heating processes.

After the resin inner tube 28 is put into a virtually molten state, air is blown by way of the through hole 50 of the mandrel 52 in order to expand the resin inner tube 28. As a result, the resin inner layer 14 having a thickness smaller than that of the rubber outer tube 12 is formed so that it conforms to the inner periphery of the rubber outer layer 12 of the resulting laminated hose 10, and at the same time the outer periphery of the resin inner layer 14 is adhered and closely bonded to the inner periphery of the rubber outer layer 12 thereof.

When blow molding the heated resin inner tube 28, there might arise a fear that the air is trapped between the resin inner tube 28 and the rubber outer tube 12 so as to inhibit the resin inner tube 28 and the rubber outer tube 12 from being closely bonded satisfactorily. Such a fear can be avoided by providing the rubber outer tube 12 with a plurality of fine holes (not shown) which are adapted to release the trapped air to the outside through themselves.

### Modified Versions of the First Preferred Embodiment

The problem associated with the trapped air can be solved by the other processes as illustrated in Figures 4 (A) and 4 (B). For instance, as illustrated in Figure 4 (A) (a), a mandrel 48 with the resin inner tube 28 disposed therearound is inserted into the rubber outer tube 12 at one of the ends, and a plug 58 is inserted into the rubber outer tube 12 at the other end. The air in the rubber outer tube 12 is then vacuum suctioned by way of a through hole 60 formed in the plug 58 and adapted for the vacuum suctioning. Simultaneously with the vacuum suctioning operation, the resin tube 28 is inserted into the rubber outer tube 12 together with the mandrel 48 in the longitudinal direction (i.e., from the left-hand side to the right-hand side in the drawing), thereby disposing the resin inner tube 28 in the outer rubber tube 12 as illustrated in Figure 4 (A) (b). Finally, the blow molding is carried out to the resin inner tube 28 with the mandrels 48 and 52 installed and disposed in the rubber outer tube 12 as illustrated in Figure 4 (A) (b).

Further, the trapped air can be avoided by the process as illustrated in Figures 4 (B) (a) and 4 (B) (b). For example, as illustrated in Figure 4 (B) (a), there is disposed a special mandrel 66 at one of the ends of the rubber outer tube 12 and the resin inner tube 28. The mandrel 66 includes a resilient membrane 62 adapted to increase and decrease its diameter, and a fluid supply passage 64 adapted to blow air for expanding the membrane 62 so as to increase the diameter. With the mandrel 66, the air between the resin inner tube 28 and the rubber outer tube 12 can be released to the outside by shifting the timings of the air blowing operation into the resin inner tube 28 and the diameter increasing-decreasing operation of the membrane 62. In particular, this process can be carried out more effectively when it is done simultaneously with a vacuum suctioning operation. In the vacuum suctioning operation, the air is evacuated through the annular space between the rubber outer tube 12 and the resin inner tube 28 at the end.

According to the laminated hose production process of the First Preferred Embodiment, the resin inner tube 28 is blow molded while it is enclosed by the mandrels 48 and 52 at the ends. Accordingly, it is unnecessary to form the resin inner tube 28 in a bag shape at one of the ends as done in the conventional process set forth in Japanese Unexamined Patent Publication (KOKAI) No. 3-275,328 and illustrated in Figure 9 (A). Thus, it is possible to get rid of the cutting step adapted for cutting the blow molded resin inner tube 28 at the end after the blow molding is completed. As a result, there hardly arises the material loss associated with the cutting. In addition, the overall production process can be simplified because the final product can be obtained by simply carrying out the blow molding.

Further, according to the laminated hose production process of the First Preferred Embodiment, the blow molding can be carried out while the mandrels 48 and 52 inhibit the resin inner tube 28 from varying the diameters of the openings at the ends in the inner periphery. Hence, it is possible to obtain the blow molded product, e.g., the laminated hose 10, having favorable dimensional accuracy at the ends in the inner periphery.

Furthermore, as can be appreciated from the foregoing descriptions, the laminated hose production process of the First Preferred Embodiment requires the ordinary simple blow molding mold. Therefore, the laminated hose production process enables to advantageously reduce the mold cost, and the facility cost eventually.

Moreover, in the laminated hose production process of the First Preferred Embodiment, the resin inner tube 28 is formed by extrusion molding. Consequently, it is possible to form the resin inner tube 28 in a thinner thickness, e.g., in a thickness of about 0.01 mm, if required. Additionally, it is possible to carry out the adhesive coating onto the outer periphery of the resin inner tube 28 in advance before the subsequent steps are carried out. Therefore, it is possible to advantageously carry out the thickness control on the adhesive, the adhesive drying, and the like, with ease. Here, it should be noted that the adhesive coating can be carried out onto the inner periphery of the rubber outer tube 12, or the adhesive can be compounded in the rubber outer tube 12 and/or the resin inner tube 28.

In the case that these adhesive applying operations are carried out, the laminated hose 10 can hardly suffer from the problem as illustrated in Figure 9 (B) when it is subject to vibrations, negative pressures, or the like. Namely, the resin inner layer 14 is inhibited from falling down off the rubber outer layer 12 even when the laminated hose 10 is subjected to vibrations, negative pressures, or the like. However, in the case that the resin inner layer 14 has a relatively heavier thickness, e.g., a thickness of 0.5 mm or more, the adhesive applying operations can be omitted because the resin inner layer 14 having such a heavier thickness is less likely to fall down off the rubber outer layer 12 even when the laminated hose 10 is subjected to vibrations, negative pressures, or the like.

### Second Preferred Embodiment

The Second Preferred Embodiment of the present invention will be hereinafter described with reference to Figures 5 (A) through 5 (D) and Figures 6 (a) through 6 (c). In particular, Figures 5 (A) through 5 (D) illustrate the overall production process of the Second Preferred Embodiment, and Figures 6 (a) through 6 (c) illustrate the preliminary forming step thereof.

As illustrated in Figure 5 (A), in the Second Preferred Embodiment, a laminated tubular preform 32 are first prepared. The laminated tubular preform 32 includes an unvulcanized rubber outer tube 28 having a predetermined thickness, and a resin inner tube 30 having a thickness smaller than that of the unvulcanized rubber outer tube 28 and disposed therein. In the Second Preferred Embodiment, the laminated tubular preform 32 can be formed by molding with a mold (e.g., injection molding), but it can be formed by extrusion molding, by blow molding, or the like, as well.

Specifically speaking, the laminated tubular preform 32 can be formed by extrusion molding with ease as illustrated in Figures 6 (a) through 6 (c). For example, a continuous resin inner tube 30a is extrusion molded in a continuous length continuously by using a first extruder 34, it is simultaneously introduced into a cross head die of a second extruder 36. Then, an unvulcanized rubber outer tube 28a is extrusion molded in a continuous length continuously so as to coat over the outer periphery of the continuous resin inner tube 30a by using the second extruder 36. Finally, the continuous laminated tubular preform is cut to a predetermined dimension so as to prepare the laminated tubular preform 32 having a predetermined length.

In the preliminary forming step of the Second Preferred Embodiment, a coating step can be carried out, and it results in the following advantageous effects: It is possible to control the thickness of the coated adhesive, dry the coated adhesive, or the like, with ease. For example, the coating step can be carried out by the processes as illustrated in Figures 6 (a), 6 (b), 6 (c), and the like. For instance, as illustrated in Figure 6 (a), the coating step can be carried out by immersing the continuous resin inner tube 30a into an adhesive bath 52 holding an adhesive solution 50 therein. Further, as illustrated in Figure 6 (b), the coating step can be carried out by bringing the continuous resin inner tube 30a into contact continuously with sponges 54, 54 soaked with an adhesive solution 50. Furthermore, as illustrated in Figure 6 (c), the coating step can be carried out by spraying an adhesive solution 50 onto the continuous resin inner tube 30a through nozzles 56. Naturally, it is possible to employ coating steps other than described above.

When such a coating step is carried out onto the continuous resin inner tube 30a, it is possible to inhibit the resin inner layer 14 of the completed laminated hose 10 from falling down off the outer rubber layer 12 thereof as illustrated in Figure 9 (B) when the completed laminated hose 10 is subjected to vibrations, negative pressures, or the like.

Also in the Second Preferred Embodiment, the inner tube outer periphery activating steps, e.g., the sodium (Na) treatment, the flame treatment, the corona treatment, the sputtering treatment, or the like, can be carried out in order to improve the adhesion of the resin inner tube 30 on the outer periphery as set forth in the "First Preferred Embodiment" section.

Turning now back to Figure 5, in the production process of the Second Preferred Embodiment, the thus prepared laminated tubular preform 32 is closed at the openings at the ends by inserting mandrels 42 and 38 into the openings, thereby enclosing the openings at the ends and inhibiting the inside diameters of the openings from varying as illustrated in Figure 5 (B). The mandrel 42 is provided with a through hole 40 adapted for an air blowing operation later described.

Thereafter, as illustrated in Figure 5 (C), the laminated tubular preform 32 with the mandrels 38 and 42 installed is disposed in a cavity of a blow molding mold 44. Then, the resin inner tube 30 is heated in order to put it into a virtually molten state (or a softened state). For instance, the heating can be carried out as follows. Namely, the resin inner tube 30 can be heated with a heater 45 which is advanced through the mandrel 38 so as to be placed in the resin inner tube 30 as illustrated in Figure 5 (C). If such is the case, the heater 45 can be a far-infrared radiation heater, or the like. Naturally, it is possible to employ the other heating processes such as heating by blowing hot air, or the like. Of course, it is possible to heat the resin inner tube 30 so as to put it into the softened state prior to the disposing step in which the laminated tubular preform 32 is disposed in the blow molding mold 44.

As illustrated in Figure 5 (D), after the resin inner tube 30 is softened, and after the laminated tubular preform 32 with the softened resin inner tube 30 disposed therein and with the mandrels 38 and 42 installed is disposed in the blow molding mold 44, air is blown by way of the through hole 40 of the mandrel 42 in order to expand and bring the outer periphery of the laminated tubular preform 32 into close contact with the inner periphery of the cavity of the blow molding mold 44.

While keeping the air blowing operation running, the unvulcanized rubber outer tube 28 is heated in order to vulcanize it. At this moment, however, it is only necessary to virtually keep the pressure of the air blown into the laminated tubular preform 32. The heating of the unvulcanized rubber outer tube 28 can be carried out by putting the whole blow molding mold 44 into a heating oven, or, as illustrated in Figures 5 (C) and 5 (D), by operating a heater 47 buried in the blow molding mold 44. During the heating, it is needed to adjust the heating temperature so that the resin inner tube 30 is not put into a molten state.

After the laminated tubular preform 32 is formed into the configuration of the cavity of the blow molding mold 44 and the unvulcanized rubber outer tube 28 is vulcanized to the rubber outer layer 12 of the resulting laminated hose 10, the laminated hose 10 is taken out of the blow molding mold 44. Before removing the laminated hose 10 from the blow molding mold 44, it is preferable to cool the resulting resin inner layer 14 by blowing cold air into the laminated hose 10 prior to the removing operation. When a blow molded product having such a high temperature is taken out of a blow molding mold, there might arise a fear for deforming the resin inner layer 14. Of course, the resin inner layer 14 can be cooled by cooling the whole blow molding mold 44.

According to the laminated hose production process of the Second Preferred Embodiment, the resin inner tube 30 is made into the laminated tubular preform 32 together with the unvulcanized rubber outer tube 28, and thereafter the laminated tubular preform 32 is blow molded while it is enclosed by the mandrels 38 and 42 at the ends. Accordingly, it is unnecessary to form the resin inner tube 30 or the laminated tubular preform 32 in a bag shape at one of the ends as done in the conventional process set forth in Japanese Unexamined Patent Publication (KOKAI) No. 3-275,328 and illustrated in Figure 9 (A). Thus, there scarcely arises the material loss associated with the cutting the bag-shaped end off. In addition, the overall production process can be simplified because the final product can be obtained by simply carrying out the blow molding.

Further, according to the laminated hose production process of the Second Preferred Embodiment, the blow molding can be carried out while the mandrels 38 and 42 inhibit the resin inner tube 30 from varying the diameters of the openings at the ends in the inner periphery. Hence, it is possible to obtain the blow molded product, e.g., the laminated hose 10, having favorable dimensional accuracy at the ends in the inner periphery.

### Third Preferred Embodiment

The Third Preferred Embodiment of the present invention will be hereinafter described with reference to Figures 7 (A) and 7 (B), and it is especially adapted for producing the bent laminated hose 18 illustrated in Figure 1 (B). In particular, Figures 7 (A) and 7 (B) illustrate the disposing step and the forming step of the Third Preferred Embodiment, respectively. Other than the disposing step and the forming step in which a blow molding mold illustrated in Figures 7 (A) and 7 (B) is employed, the Third Preferred Embodiment is substantially identical with the Second Preferred Embodiment.

As illustrated in Figure 7 (A) and 7 (B), in the Third Preferred Embodiment, the blow molding mold includes a pair of detachable end parts 46, 46, a detachable main upper part 48a, and a detachable main lower part 48b. The detachable end parts 46, 46 are adapted to be installed around the ends of the laminated tubular preform 32, and they are provided with the mandrel 42 and the mandrel 38, respectively. The main upper part 48a and the main lower part 48b are provided with a cavity adapted for forming the bellows 16 and bending the laminated tubular preform 32 to the final configuration, respectively.

As illustrated in Figure 7 (B), the end parts 46, 46 of the blow molding mold are disposed around the ends of the laminated tubular preform 32, and at the same time the mandrels 42 and 38 are inserted into the resin inner tube 30 so as to enclose the ends, thereby closing the openings of the resin inner tube 30 at the ends and inhibiting the inside diameters of the openings from varying. Then, the laminated tubular preform 32 with the ends parts 46, 46 of the blow molding mold installed is disposed between the main upper part 48a and the main lower part 48b, and it is heated in order to soften the resin inner tube 30 and then to vulcanize the unvulcanized rubber outer tube 28. Finally, the main upper part 48a and the main lower part 48b are slidably brought into contact with the laminated tubular preform 32, thereby carrying out the forming step adapted to produce the bent laminated hose 18 illustrated in Figure 1 (B).

### Fourth Preferred Embodiment

The Fourth Preferred Embodiment of the present invention will be hereinafter described, and it is especially adapted for producing the bent laminated hose 22 illustrated in Figure 1 (C). The Fourth Preferred Embodiment is substantially identical with the Third Preferred Embodiment, however, the main upper part 48a and the main lower part 48b of the blow molding mold have a cavity which is adapted to bent the laminated tubular preform 32 at two positions and to form it into the bent laminated hose 22 illustrated in Figure 1 (C). In particular, the main upper part 48a and the main lower part 48b of the blow molding mold are free from the cavity adapted to form the bellows 16 illustrated in Figure 7 (B), but they are adapted to bent the laminated tubular preform 32 at two positions. Other than the blow molding mold, the Fourth Preferred Embodiment is carried out in the same manner as the Third Preferred Embodiment, and accordingly it will not be described hereinafter.

The present invention has been described so far with reference to First through Fourth Preferred Embodiments. Of course, in the Second through Fourth Preferred Embodiments, the laminated tubular preform 32 can be obtained by molding the unvulcanized rubber outer tube 28 and the resin inner tube 30 independently and thereafter by combining them into the laminated tubular preform 32, or it can be obtained also by winding an unvulcanized rubber sheet around the resin inner tube 32.

Further, also in the Second through Fourth Preferred Embodiments, the rubber outer layer 12 and the resin inner layer 14 can be bonded by compounding an adhesive in the unvulcanized rubber outer tube 28 and/or the resin inner tube 30.

Furthermore, also in the Second through Third Preferred Embodiment, in the case that the resin inner layer 14 has a relatively heavier thickness, e.g., a thickness of 0.5 mm or more, the adhesive applying operations can be omitted because the resin inner layer 14 having such a heavier thickness is less likely fall down off the rubber outer layer 12 even when the laminated hoses 10, 18, and 22 are subjected to vibrations, negative pressures, or the like.

Having now fully described the present invention, it will be apparent to one of ordinary skill in the art that many changes and modifications can be made thereto without departing from the spirit or scope of the present invention as set forth herein including the appended claims.

A process for producing a laminated hose comprises the steps of a preliminary forming step of forming a preform including an inner tube and an outer tube, a disposing step of disposing the preform in a mold while inserting mandrels into openings of the preform so as to close the openings and inhibit inside diameters of the openings from varying, and a forming step of forming the preform into a laminated hose having a predetermined shape, thereby bonding outer periphery of the inner tube closely onto inner periphery of the outer tube. The production process can not only reduce the production cost of the laminated hose markedly but also give the laminated hose high dimensional accuracy and an improved sealing property at the ends in the inner peripheries.

## Claims

1. A process for producing a laminated hose, comprising the steps of:
a preliminary forming step of forming a preform including an inner tube (28) and an outer tube (12);
a disposing step of disposing said preform in a mold (54); and
a forming step of forming said preform into a laminated hose having a predetermined shape, thereby bonding the outer periphery of said inner tube (28) closely onto the inner periphery of said outer tube (12);
said process being
**characterized in that**
said preform is disposed in said mold (54) while inserting mandrels (48, 52) into the openings of said preform so as to close the openings and inhibiting inside diameters of the openings from varying.

2. The process according to claim 1, further
**characterized in that**
said preliminary forming step includes:
a preliminary outer tube forming step of forming said outer tube (12) in a predetermined shape;
a preliminary inner tube forming step of forming said inner tube (28) in a straight tubular shape; and
an assembling step of assembling said straight inner tube (28) into said outer tube (12).

3. The process according to claim 2, further
**characterized in that** said straight inner tube (28) is formed so as to conform to said predetermined shape of said outer tube (12) by blow molding in said forming step.

4. The process according to claim 2, further
**characterized in that** said straight inner tube (28) comprises resin and has a predetermined thickness, and said outer tube (12) comprises rubber and has a thickness larger than that of said straight inner tube (28).

5. The process according to claim 2, further
**characterized in that** said preliminary inner tube forming step is carried out by extrusion molding.

6. The process according to claim 2, further
**characterized in that** said preliminary inner tube forming step further includes a coating step adapted to coat an adhesive on the outer periphery of said straight inner tube (28).

7. The process according to claim 2, further
**characterized in that** said preliminary inner tube forming step further includes an inner tube outer periphery activating step adapted to improve adhesion of said straight inner tube (28) on the outer periphery.

8. The process according to claim 7, further
**characterized in that** said inner tube outer periphery activating step is carried out by at least one of a sodium (Na) treatment, a flame treatment, a corona treatment and a sputtering treatment.

9. The process according to claim 1, further
**characterized in that** said process further includes a heating step adapted for heating said preform so as to soften said inner tube of said preform, and carried out prior to said disposing step, subsequent to said disposing step, or simultaneously with said forming step.

10. The process according to claim 1, further
**characterized in that** said preliminary forming step is adapted for forming a preform having a tubular shape and including a straight resin inner tube (30) having a predetermined thickness and a straight unvulcanized rubber outer tube (28) having a thickness larger than that of the straight resin inner tube (30) and provided with the straight resin inner tube (30) disposed therein.

11. The process according to claim 10, further
**characterized in that** said preform is formed into said laminated hose having said predetermined shape corresponding to a cavity of said mold (44) by blow molding in said forming step while vulcanising said straight unvulcanized rubber outer tube (28).

12. The process according to claim 1, further
**characterized in that** said preliminary forming step further includes a coating step adapted to coat an adhesive on said outer periphery of said inner tube (28).

13. The process according to claim 1, further
**characterized in that** said preliminary forming step further includes an inner tube outer periphery activating step adapted to improve the adhesion of said inner tube (28) on the outer periphery.

14. The process according to claim 13, further
**characterized in that** said inner tube outer periphery activating step is carried out by at least one of a sodium (Na) treatment, a flame treatment, a corona treatment and a sputtering treatment.

15. The process according to claim 1, further
**characterized in that** said forming step is carried out by blow molding adapted to blow air into said inner tube of said preform so as to form said preform into said laminated hose having said predetermined shape corresponding to a cavity of said mold (54).

## Patentansprüche

1. Ein Verfahren zur Herstellung eines laminierten Schlauches, das die Schritte umfaßt:
- einen präliminären Formgebungsschritt, um einen Vorformling auszubilden, der eine innere Röhre (28) sowie eine äußere Röhre (12) enthält;
- einen Einsetzschritt, um den erwähnten Vorformling in einem Formwerkzeug (54) anzuordnen; und
- einen Formgebungsschritt, um den erwähnten Vorformling zu einem laminierten Schlauch mit einer vorbestimmten Gestalt auszubilden und dabei den Außenumfang der besagten inneren Röhre (28) innig mit dem Innenumfang der besagten äußeren Röhre (12) zu verbinden; das genannte Verfahren ist dadurch gekennzeichnet, daß
- der erwähnte Vorformling in dem genannten Formwerkzeug (54) angeordnet wird, während Dorne (48, 52) in die Öffnungen des erwähnten Vorformlings eingesetzt werden, um die Öffnungen zu verschließen und ein Verändern der Innendurchmesser der Öffnungen zu verhindern.

2. Das Verfahren nach Anspruch 1, ferner dadurch gekennzeichnet, daß
- der erwähnte präliminäre Formgebungsschritt einschließt:
- einen präliminären Außenröhre-Formgebungsschritt zur Ausbildung der besagten äußeren Röhre (12) zu einer vorbestimmten Gestalt;
- einen präliminären Innenröhre - Formgebungsschritt zur Ausbildung der besagten inneren Röhre (28) zu einer gestreckten Gestalt; und
- einen Zusammenbauschritt, um die besagte gestreckte innere Röhre (28) in die besagte äußere Röhre (12) einzufügen.

3. Das Verfahren nach Anspruch 2, ferner dadurch gekennzeichnet, daß die besagte gestreckte innere Röhre (28) in dem genannten Formgebungsschritt durch Blasformen ausgebildet wird, um mit der erwähnten vorbestimmten Gestalt der besagten äußeren Röhre (12) übereinzustimmen.

4. Das Verfahren nach Anspruch 2, ferner dadurch gekennzeichnet, daß die besagte gestreckte innere Röhre (28) Harz umfaßt sowie eine vorbestimmte Dicke hat und daß die besagte äußere Röhre (12) Gummi umfaßt sowie eine Dicke hat, die größer als diejenige der besagten gestreckten inneren Röhre (28) ist.

5. Das Verfahren nach Anspruch 2, ferner dadurch gekennzeichnet, daß der erwähnte präliminäre Innenröhre-Formgebungsschritt durch Extrudieren ausgeführt wird.

6. Das Verfahren nach Anspruch 2, ferner dadurch gekennzeichnet, daß der erwähnte präliminäre Innenröhre-Formgebungsschritt des weiteren einen Auftragschritt einschließt, der dazu eingerichtet ist, ein Klebemittel auf den Außenumfang der besagten gestreckten inneren Röhre (28) aufzutragen.

7. Das Verfahren nach Anspruch 2, ferner dadurch gekennzeichnet, daß der erwähnte präliminäre Innenröhre-Formgebungsschritt des weiteren einen Aktivierungsschritt für den Außenumfang der inneren Röhre einschließt, der dazu eingerichtet ist, ein Adhäsionsvermögen der besagten gestreckten inneren Röhre (28) am Außenumfang zu verbessern.

8. Das Verfahren nach Anspruch 7, ferner dadurch gekennzeichnet, daß der Aktivierungsschritt für den Außenumfang der inneren Röhre durch mindestens eine aus einer Natrium-(Na-) Behandlung, einer Flammbehandlung, einer Koronabehandlung und einer Zerstäubungsbehandlung ausgeführt wird.

9. Das Verfahren nach Anspruch 1, ferner dadurch gekennzeichnet, daß das genannte Verfahren des weiteren einen Erhitzungsschritt einschließt, der eingerichtet ist, um den erwähnten Vorformling zu erhitzen, so daß die besagte innere Röhre des erwähnten Vorformlings erweicht wird, und der vor dem genannten Einsetzschritt, anschließend an den genannten Einsetzschritt oder gleichzeitig mit dem genannten Formgebungsschritt ausgeführt wird.

10. Das Verfahren nach Anspruch 1, ferner dadurch gekennzeichnet, daß der erwähnte präliminäre Formgebungsschritt dazu eingerichtet ist, einen Vorformling auszubilden, der eine röhrenförmige Gestalt hat sowie eine gerade innere Harzröre (30) mit einer vorbestimmten Dicke und eine gerade, unvulkanisierte äußere Gummiröhre (28) mit einer Dicke, welche größer ist als diejenige der geraden inneren Harzröhre (30), und die mit der darin angeordneten geraden inneren Harzröhre (30) ausgestattet ist, enthält.

11. Das Verfahren nach Anspruch 10, ferner dadurch gekennzeichnet, daß der erwähnte Vorformling zu dem besagten laminierten Schlauch mit der einem Hohlraum des genannten Formwerkzeugs (44) entsprechenden vorbestimmten Gestalt in dem genannten Formgebungsschritt durch Blasformen ausgebildet wird, während die besagte gerade, unvulkanisiserte äußere Gummiröhre (28) vulkanisiert wird.

12. Das Verfahren nach Anspruch 1, ferner dadurch gekennzeichnet, daß der erwähnte präliminäre Formgebungsschritt des weiteren einen Auftragschritt einschließt, der dazu eingerichtet ist, ein Klebemittel an dem genannten Außenumfang der besagten inneren Röhre (28) aufzutragen.

13. Das Verfahren nach Anspruch 1, ferner dadurch gekennzeichnete, daß der erwähnte präliminäre Formgebungsschritt des weiteren einen Aktivierungsschritt für den Außenumfang der inneren Röhre einschließt, der dazu eingerichtet ist, das Adhäsionsvermögen der besagten inneren Röhre (28) am Außenumfang zu verbessern.

14. Das Verfahren nach Anspruch 13, ferner dadurch gekennzeichnet, daß der Aktivierungsschritt für den Außenumfang der inneren Röhre durch mindestens eine aus einer Natrium-(Na-)Behandlung, einer Flammbehandlung, einer Koronabehandlung und einer Zerstäubungsbehandlung ausgeführt wird.

15. Das Verfahren nach Anspruch 1, ferner dadurch gekennzeichnet, daß der genannte Formgebungsschritt durch Blasformen ausgeführt wird, was dazu eingerichtet ist, Luft in die besagte innere Röhre des erwähnten Vorformlings zu blasen, um den erwähnten Vorformling zu dem besagten laminierten Schlauch mit der erwähnten vorbestimmten, einem Hohlraum des genannten Formwerkzeugs (54) entsprechenden Gestalt auszubilden.

## Revendications

1. Un procédé de fabrication d'un tuyau multicouches, comportant les étapes de:
. formation préliminaire pour réaliser une préforme comportant un tube interne (28) et un tube externe (12);
. disposition pour disposer ladite préforme dans un moule (54); et
. de formation pour former ladite préforme en un tuyau multicouche comportant une enveloppe prédéterminée, collant ainsi étroitement la périphérie extérieure du dit tube interne (28) sur la périphérie intérieure du dit tube externe (12);
ledit procédé étant
**caractérisé en ce que**
ladite préforme est disposée dans ledit moule (54) tandis que sont insérés des mandrins (48,52) dans les ouvertures de ladite préforme de manière à fermer les ouvertures et à empêcher la variation des diamètres intérieurs des ouvertures.

2. Le procédé selon la revendication 1, en outre
**caractérisé en ce que**
ladite étape de formation préliminaire comporte
. une étape de formation préliminaire du tube externe pour donnerau dit tube externe (12) une forme prédéterminée;
. une étape de formation préliminaire du tube interne pour donner au dit tube interne (28) une forme tubulaire droite; et
. une étape d'assemblage pour assembler ledit tube interne droit (28) dans ledit tube externe (12).

3. Le procédé selon la revendication 2, en outre
**caractérisé en ce que** ledit tube interne droit (28) est formé de manière à se conformer à ladite forme prédéterminée du dit tube externe (12) par extrusionsoufflage dans ladite étape de formation.

4. Le procédé selon la revendication 2, en outre
**caractérisé en ce que** ledit tube interne droit (28) comporte de la résine et a une épaisseur prédéterminée, et ledit tube externe (12) comporte du caoutchouc et a une épaisseur plus grande que celle du dit tube interne droit (28).

5. Le procédé selon la revendication 2, en outre
**caractérisé en ce que** ladite étape de formation préliminaire du tube interne est exécutée par extrusion-soufflage.

6. Le procédé selon la revendication 2, en outre
**caractérisé en ce que** ladite étape de formation préliminaire du tube interne comporte en outre une étape de revêtement destinée à recouvrir par un adhésif la périphérie extérieure du dit tube interne droit (28).

7. Le procédé selon la revendication 2, en outre
**caractérisé en ce que**
ladite étape de formation préliminaire du tube interne comporte de plus une étape d'activation de la périphérie extérieure du tube interne destinée à améliorer l'adhésion du dit tube interne droit (28) sur la périphérie extérieure.

8. Le procédé selon la revendication 7, en outre
**caractérisé en ce que** l'étape d'activation de la périphérie extérieure du tube interne est exécutée par au moins l'un des traitements parmi un traitement au sodium (Na), un traitement à la flamme, un traitement par corona et un traitement par pulvérisation.

9. Le procédé selon la revendication 1, en outre
**caractérisé en ce que** ledit procédé comporte de plus une étape de chauffage pour chauffer ladite préforme de manière à ramollir ledit tube interne de ladite préforme, et exécuter avant ladite étape de disposition, après ladite étape de disposition, ou simultanément à ladite étape de formation.

10. Le procédé selon la revendication 1, en outre
**caractérisé en ce que** ladite étape de formation préliminaire est destinée à former une préforme de type tubulaire et inclure un tube interne de résine droit (30) comportant une épaisseur prédéterminée et un tube externe en caoutchouc non vulcanisé droit (28) comportant une épaisseur plus grande que celle du tube interne de résine droit (30) et prévu avec le tube interne de résine droit (30) disposé à l'intérieur.

11. Le procédé selon la revendication 10, en outre
**caractérisé en ce que** ladite préforme est formée dans ledit tuyau multicouche ayant ladite enveloppe prédéterminée correspondant à une cavité du dit moule (44) par extrusion-soufflage durant ladite étape de formation tandis que ledit tube interne droit en caoutchouc non vulcanisé est vulcanisé.

12. Le procédé selon la revendication 1, en outre
**caractérisé en ce que** ladite étape de formation préliminaire comporte en outre une étape de revêtement destinée à recouvrir d'un adhésif la périphérie extérieure du dit tube interne (28).

13. Le procédé selon la revendication 1 en outre
**caractérisé en ce que** ladite étape de formation préliminaire comporte de plus une étape d'activation de la périphérie extérieure du tube interne destinée à améliorer l'adhésion du dit tube interne (28) sur la périphérie extérieure.

14. Le procédé selon la revendication 13, en outre
**caractérisé en ce que** ladite étape d'activation de la périphérie extérieure du tube interne est exécutée par au moins l'un des traitements parmi un traitement au sodium (Na), un traitement par flamme, un traitement par corona et un traitement par pulvérisation.

15. Le procédé selon la revendication 1, en outre
**caractérisé en ce que** ladite étape de formation est exécutée par extrusion-soufflage destinée à souffler de l'air dans ledit tube interne de ladite préforme de manière à former ladite préforme en dit tuyau multicouche ayant ladite enveloppe prédéterminée correspondant à une cavité du dit moule (54).
